# EUROPÄISCHE PATENTSCHRIFT

(11) **EP 2 576 133 B1**
(45) Veröffentlichungstag und Bekanntmachung des Hinweises auf die Patenterteilung: **18.06.2014**
(21) Anmeldenummer: 11720044.4
(22) Anmeldetag: 17.05.2011
(51) Int. Cl.: B23Q 5/02, B23Q 16/02, B23B 29/00, B23Q 11/04

(54) **WERKZEUGREVOLVER**
TOOL TURRET
TOURELLE REVOLVER

(30) Priorität: 28.05.2010 DE 102010021948; 28.05.2010 DE 102010021949
(43) Veröffentlichungstag der Anmeldung: 10.04.2013
(73) Patentinhaber: Sauter Feinmechanik GmbH, 72555 Metzingen (DE)
(72) Erfinder: STIEFEL, Jürgen, 72664 Kohlberg (DE)
(74) Vertreter: Bartels, Martin Erich Arthur
(86) Internationale Anmeldenummer: PCT/EP2011/002428
(87) Internationale Veröffentlichungsnummer: WO 2011/147543

(56) Entgegenhaltungen:
- EP-A2- 0 799 663
- DE-A1- 3 833 511
- DE-A1- 19 838 505
- US-A- 5 632 075
- US-B1- 7 475 463

## Beschreibung

Die Erfindung betrifft einen Werkzeugrevolver mit einer Werkzeugscheibe, die mindestens eine Werkzeugaufnahme für ein Bearbeitungswerkzeug aufweist und an einer Aufnahmescheibe festgelegt ist, die um eine eine Schwenkachse definierende Trägersäule in Positionen schwenkbar ist, in denen das betreffende Bearbeitungswerkzeug in einer Arbeitsposition ist, wobei an der Werkzeugscheibe eine Anlagefläche vorgesehen ist, die mittels einer Spanneinrichtung mit einer Aufnahmefläche an der Aufnahmescheibe verspannbar ist.

Werkzeugrevolver dieser Art sind insbesondere aus der EP 0 799 663 A2 und der DE 198 38 505 A1 bekannt. Beim Stand der Technik, wie er beispielsweise in der US Patentschrift 7,475,463 dokumentiert ist, bildet die Aufnahmescheibe, an der die Werkzeugscheibe befestigt ist, sowohl ein Tragelement, an dem die Werkzeugscheibe für ihre Schwenkbewegungen gehalten ist, als auch gleichzeitig das abbtriebsseitige Element des Schwenkantriebes für die Lageeinstellung betreffender Bearbeitungswerkzeuge in gewünschte Arbeitspositionen. Beim Betrieb derartiger Einheiten kommt es an der den Revolverkopf bildenden Werkzeugscheibe zu hohen Beanspruchungen mit entsprechend hohen Drehmomenten, die die Werkzeugscheibe aus der Sollposition zu verdrehen suchen, wenn an der Werkzeugscheibe beispielsweise Rotationswerkzeuge für hohe Schnittleistungen oder feststehende Werkzeuge angebracht sind, beispielsweise Drehmeißel für Dreharbeiten oder dergleichen. Um bei derartigen Beanspruchungen eine hochwertige Bearbeitung sicherzustellen, sind daher besondere Maßnamen erforderlich, die eine sichere Festlegung der Werkzeugscheibe an der Aufnahmescheibe gewährleisten.

Im Stand der Technik sind in der Werkzeugscheibe Schraubenbolzenbohrungen vorgesehen, um mit Zylinderschrauben von der Innenseite des Revolverkopfes her die Werkzeugscheibe mit der Aufnahmescheibe zu verschrauben. Derartige Lösungen sind nicht in völliger Hinsicht zufriedenstellend. Neben dem für Herstellung und Montage erforderlichen Aufwand ist es bei der Verschraubung von Werkzeugscheibe und Aufnahmescheibe schwierig, eine Sicherheitsfunktion zu realisieren, die in einem Notfall eine Verdrehung der Werkzeugscheibe mit dem Revolverkopf relativ zur Aufnahmescheibe ermöglicht, um bei einem im Betrieb auftretenden sogenannten "Crashfall" eine Beschädigung des Schwenkantriebes und/oder des Revolverkopfes zu vermeiden.

Im Hinblick hierauf liegt der Erfindung die Aufgabe zugrunde, einen Werkzeugrevolver zur Verfügung zu stellen, der sich durch eine baulich einfache, eine hohe Betriebssicherheit gewährleistende Spanneinrichtung für die Festlegung der Werkzeugscheibe an der Aufnahmescheibe auszeichnet.

Erfindungsgemäß ist diese Aufgabe durch einen Werkzeugrevolver gelöst, der die Merkmale des Patentanspruches 1 in seiner Gesamtheit aufweist.

Demnach besteht eine wesentliche Besonderheit der Erfindung darin, dass anstelle einer zwischen Werkzeugscheibe und Aufnahmescheibe vorgesehenen Verschraubung die Lagefestlegung durch Erzeugen einer Anpresskraft zwischen werkzeugscheibenseitiger Anlagefläche und einer Aufnahmefläche der Aufnahmescheibe erfolgt, wobei diese Anpresskraft durch eine Keilwirkung zwischen einer die Schwenkachse konzentrisch umgebenden Ringnut, die eine Schrägfläche bildet, und mindestens einem unter Druckkraft in die Ringnut eingreifenden Druckstück erzeugt wird, das eine Keilfläche besitzt, die in Zusammenwirkung mit der Schrägfläche der Ringnut eine die Spannkraft bildende Kraftkomponente erzeugt.

Neben dem Vorteil, dass dadurch die Werkzeugscheibe von Bohrungen frei bleibt, eröffnet sich die vorteilhafte Möglichkeit, die über die Keilwirkung erzeugte Anpresskraft zwischen Anlagefläche und Aufnahmefläche so zu dimensionieren, dass der resultierende Reibschluss bei Übersteigen eines kritischen Schwellenwertes des Drehmomentes ein Schlüpfen ermöglicht. Bei der Erfindung ist daher, bei einfacher Bauweise der Spanneinrichtung, der zusätzliche Vorteil gegeben, dass die erforderliche Sicherheitsfunktion gleichzeitig erfüllt ist, ohne dass diesbezüglich zusätzliche konstruktive Maßnahmen ergriffen werden müssten.

Für die optimale Dimensionierung der den gewünschten Reibschluss ergebenden, durch Keilwirkung erzielten Spannkraft sind vorzugsweise mehrere Druckstücke für die Zusammenwirkung mit der Ringnut vorgesehen.

Bei besonders vorteilhaften Ausführungsbeispielen ist die Ringnut in einer an der Aufnahmescheibe vorgesehenen, zur Schwenkachse konzentrischen Zylindermantelfläche ausgebildet, wobei die Werkzeugscheibe einen die Zylindermantelfläche übergreifenden Ansatz aufweist, an dem vorzugsweise mehr als ein Druckstück angeordnet ist. Dabei können die Zylindermantelfläche der Aufnahmescheibe und die zylindrisch ausgebildete Innenfläche des Ansatzes der Werkzeugscheibe Passflächen zur Zentrierung letzterer an der Aufnahmescheibe bilden.

Bei besonders bevorzugten Ausführungsbeispielen ist die Aufnahmescheibe durch eine flanschartige Erweiterung am Ende einer die Trägersäule umgebenden Hohlwelle gebildet, wobei die endseitige, eine Radialebene definierende Stirnfläche der Erweiterung die Aufnahmefläche bildet, die an die Anlagefläche anpressbar ist, die eine den Ansatz der Werkzeugscheibe innenseitig begrenzende Radialebene bildet.

Die Ringnut kann vorteilhafterweise einen V-förmigen Querschnitt und das jeweilige Druckstück ein die Keilfläche bildendes Keilstück aufweisen, deren gegenseitige Lagebeziehung und Abmessungen derart gewählt sind, dass die Keilfläche mit derjenigen Seitenwand der Nut zusammenwirkt, die die Schrägfläche zur Erzeugung der spannenden Kraftkomponente bildet.

Die Anordnung kann mit besonderem Vorteil so getroffen sein, dass das jeweilige Druckstück in einer im Ansatz der Werkzeugscheibe vorgesehenen Radialbohrung angeordnet ist, die ein Innengewinde für eine die Druckkraft erzeugende Verschraubung aufweist, wobei das Druckstück aus dem eigentlichen Keilstück, das die mit der Schrägfläche der Nut zusammenwirkende Keilfläche bildet, und einem relativ zu diesem Keilstück drehbaren Gewindestück gebildet ist, das Teil der Verschraubung ist. Die in dieser Weise gestaltete Spanneinrichtung zeichnet sich durch eine besonders einfache Bauweise und eine leichte Bedienbarkeit aus.

Die Radialbohrung kann vorzugsweise so gestaltet sein, dass sie einen äußeren Gewindeabschnitt für das Außengewinde des Gewindestückes und einen gewindefreien inneren Führungsabschnitt aufweist, der eine Passung zur Führung des Keilstückes bildet.

Im Hinblick auf eine besondere Montagefreundlichkeit kann die Anordnung so getroffen sein, dass Keilstück und Gewindestück drehbar, jedoch unverlierbar miteinander verbunden sind.

Nachstehend ist die Erfindung anhand eines in der Zeichnung dargestellten Ausführungsbeispieles im Einzelnen erläutert. Es zeigen:
- Fig. 1: einen Zentralschnitt des Ausführungsbeispieles des erfindungsgemäßen Werkzeugrevolvers, wobei sich eine Werkzeugaufnahme der den Revolverkopf bildenden Werkzeugscheibe in einer Arbeitsposition befindet, jedoch ohne in die Werkzeugaufnahme eingesetztes Bearbeitungswerkzeug;
- Fig. 2: eine gegenüber einer praktischen Ausführungsform geringfügig verkleinert gezeichnete Teilschnittdarstellung lediglich eines Umfangsabschnittes der Werkzeugscheibe, des zugeordneten Umfangsbereiches der Aufnahmescheibe sowie eines Druckstückes der Spanneinrichtung, wobei diese Teile in auseinandergezogener Lage dargestellt sind;
- Fig. 3: eine der Fig. 2 entsprechende Darstellung, wobei durch das in Arbeitsposition befindliche Druckstück die Werkzeugscheibe und die Aufnahmescheibe aneinander festgelegt sind; und
- Fig. 4: einen vergrößert gezeichneten Ausschnitt des in Fig. 3 mit IV bezeichneten Bezirks.

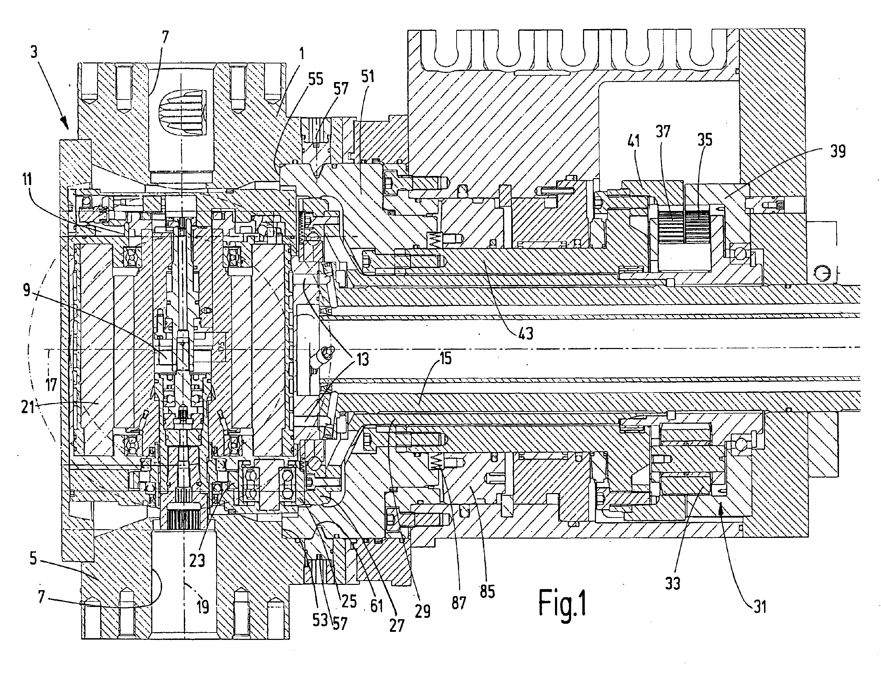

In der Zeichnung ist eine Werkzeugscheibe mit 1 bezeichnet, die Hauptbestandteil eines in Fig. 1 als Ganzes mit 3 bezeichneten Revolverkopfes bildet. Die Werkzeugscheibe 1 bildet einen umfänglichen Ringkörper 5, an dem Werkzeugaufnahmen 7 vorgesehen sind, die beispielsweise in einer Anzahl von bis zu sechzehn Werkzeugaufnahmen, die in regelmäßigen Abständen voneinander am Umfang angeordnet sind und von denen in Fig. 1 zwei Werkzeugaufnahmen 7 sichtbar sind. Dabei befindet sich eine Werkzeugaufnahme 7 in einer Arbeitsposition, in der ein gegebenenfalls aufgenommenes Bearbeitungswerkzeug, wenn es sich um ein Rotationswerkzeug handelt (in Fig. 1 nicht gezeigt), mit einer schaltbaren Antriebseinrichtung 9 für den Drehantrieb des betreffenden Rotationswerkzeuges kuppelbar ist. Die Antriebseinrichtung 9 befindet sich in dem zwischen dem Ringkörper 5 der Werkzeugscheibe 1 gebildeten inneren Aufnahmeraum 11 des Revolverkopfes 3. Die die Antriebseinrichtung 9 bildende Baueinheit ist über in Fig. 1 nur teilweise bezifferte Verbindungsschrauben 13 mit der Trägersäule 15 fest, d. h. undrehbar, verbunden, während die Werkzeugscheibe 1 um die von der Trägersäule 15 definierte Schwenkachse 17 für die Einstellung der Arbeitspositionen drehbar ist. Bei der in Fig. 1 gezeigten Schwenkstellung des Revolverkopfes 3 ist die in Fig. 1 unten liegende Werkzeugaufnahme 7 für den Direktantrieb eines in der Werkzeugaufnahme 7 befindlichen Rotationswerkzeuges (nicht gezeigt) auf die Drehachse 19 der Motorwelle des im Aufnahmeraum 11 befindlichen Elektromotors 21 ausgerichtet. Dieser Motor 21 bildet auch die Antriebsquelle für den Schwenkantrieb zur Drehung der Werkzeugscheibe 1 um die Schwenkachse 17. Zu diesem Zweck ist der Motorwelle des Elektromotors 21 einem Zwischengetriebe mit Zahnrädern 23 und 25 zuschaltbar. Das Zahnrad 25 kämmt mit der Hirth-Verzahnung an einem Zahnkranz 27, der sich als flanschartige Erweiterung am Ende einer Hohlwelle 29 befindet, die die Trägersäule 15 koaxial umgibt. Die Hohlwelle 29 bildet die Eingangswelle für ein gegenüber dem Revolverkopf 3 axial versetzt an der Trägersäule 15 gelagertes Wolfrom-Planetengetriebe 31, das entsprechend des bekannten Wolfrom-Systems zumindest ein Planetenrad 33 aufweist, das mit Innenverzahnungen 35 und 37 kämmt, die an einem mit der Trägersäule 15 ortsfesten Gehäuseteil 39 bzw. einem drehbaren Gehäuseteil 41 ausgebildet sind. Dabei weisen die Innenverzahnungen 37 und 35 geringfügig unterschiedliche Zähnezahl auf, so dass entsprechend des Wolfrom-Prinzips sich für das drehbare Gehäuseteil 41 eine weit geringere Drehzahl ergibt, verglichen mit der Eingangsdrehzahl der Hohlwelle 29. Diese stark reduzierte, für den Schwenkantrieb der Werkzeugscheibe 1 geeignete Drehzahl wird über eine abtriebsseitige Hohlwelle 43, die die Trägersäule 15 ebenfalls koaxial umgibt, auf die Aufnahmescheibe 51 übertragen, die in Form einer bundartigen Erweiterung am Ende der Hohlwelle 43 angebracht ist und die Aufnahmefläche 53 bildet, die mit der Anlagefläche 55 an der Werkzeugscheibe 1 verspannbar ist.

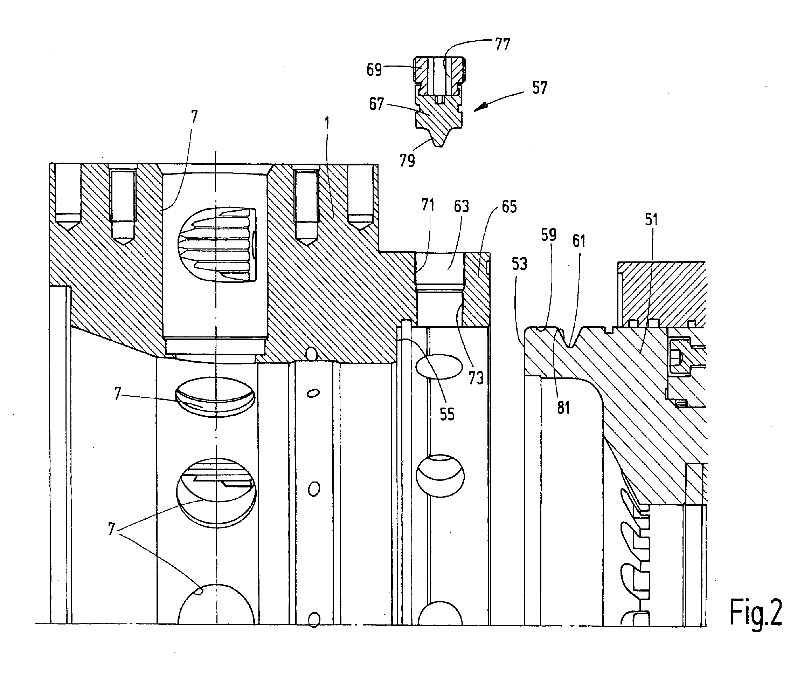

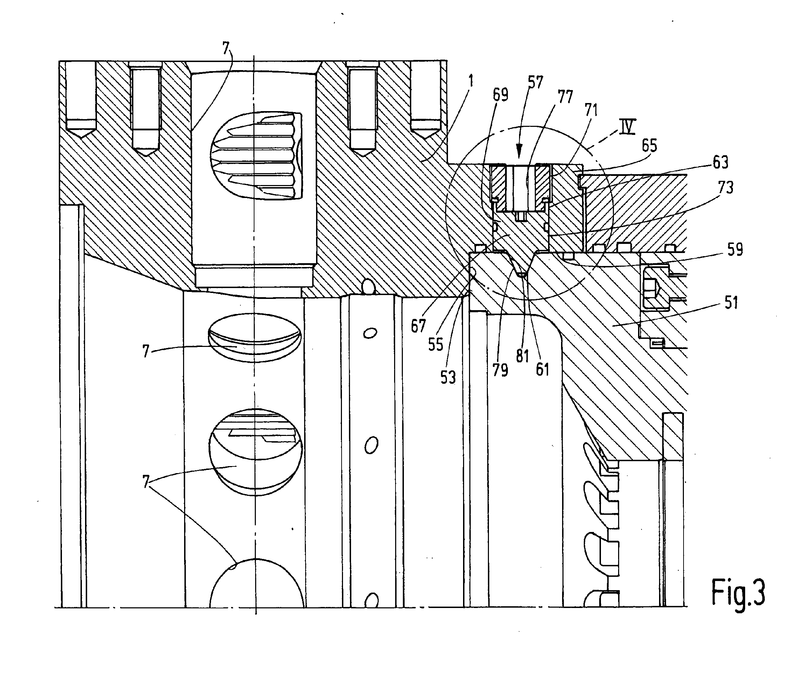

Nähere Einzelheiten der Spanneinrichtung für das Spannen der Anlagefläche 55 der Werkzeugscheibe 1 an die Aufnahmefläche 53 sind nachstehend unter besonderem Bezug auf die Fig. 2 bis 4 erläutert. Die Fig. 2 zeigt in Schnittdarstellung Umfangsabschnitte der Werkzeugscheibe 1, ohne zugehörige Baukomponenten, sowie der Aufnahmescheibe 51 in relativ zueinander auseinandergezogener Position, sowie ein Druckstück 57 als Bestandteil der Spanneinrichtung. Diese Spanneinrichtung weist in einer radial außenliegenden Zylindermantelfläche 59 der Aufnahmescheibe 51 eine umfänglich durchgehende Ringnut 61 V-förmigen Querschnitts auf, die für den Spannvorgang mit den Druckstücken 57 zusammenwirkt, von denen in Fig. 1 zwei Druckstücke 57 sichtbar sind und in Fig. 2 bis 4 jeweils ein Druckstück 57 gezeigt ist. Für die jeweiligen Druckstücke 57 sind in der Werkzeugscheibe 1 Radialbohrungen 63 vorgesehen. Diese befinden sich in einem Ansatz 65 der Werkzeugscheibe 1, der in festgelegtem Zustand (siehe Fig. 3) die Zylindermantelfläche 59 der Aufnahmescheibe 51 übergreift.

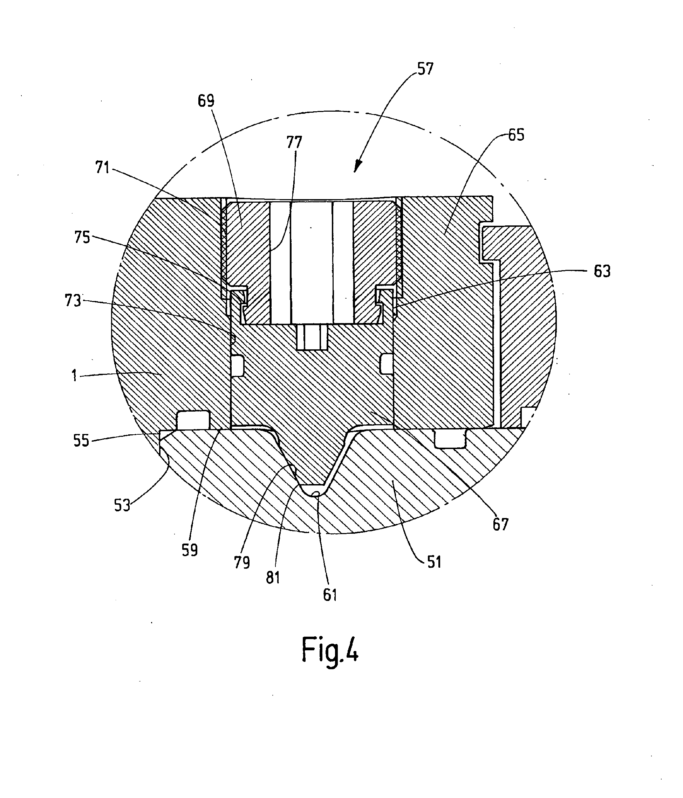

Wie am deutlichsten aus Fig. 2 und 4 zu ersehen ist, sind die Druckstücke 57 zweiteilig ausgebildet und weisen für die Zusammenwirkung mit der Ringnut 61 ein Keilstück 67 sowie ein Betätigungselement in Form eines Gewindestückes 69 auf. Die Radialbohrungen 63 weisen für das jeweilige Gewindestück 69 einen äußeren Gewindeabschnitt 71 und für das Keilstück 67 einen inneren Führungsabschnitt 73 auf, der eine Passung bildet, in der das Keilstück 67 radial beweglich geführt ist. Wie am deutlichsten aus Fig. 4 zu ersehen ist, sind Gewindestück 69 und Keilstück 67 zueinander verdrehbar, jedoch durch eine clipsartige Schnappverbindung 75 (Fig. 4) verliersicher miteinander verbunden.

Die Fig. 3 und 4 zeigen den Festlege- oder Spannzustand, bei dem durch Festziehen des Gewindestückes 69 mit Hilfe eines Innensechskant 77 das Keilstück 67 mit einer Keilfläche 79 gegen eine eine Schrägfläche 81 bildende Innenwand der Ringnut 61 gepresst ist, wodurch eine Kraftkomponente erzeugt wird, die das Keilstück 67 und damit die Werkzeugscheibe 1 in der Zeichnung nach rechts und die Aufnahmescheibe 51 in der Zeichnung nach links zu ziehen sucht, wodurch Anlagefläche 55 der Werkzeugscheibe 1 und Aufnahmefläche 53 der Aufnahmescheibe 51 miteinander verspannt werden. Durch Wahl der Anzahl der über den Umfang verteilten Druckstücke 57, des Anzugsmomentes der Gewindestücke 69 in Verbindung mit der Geometrie der Keilflächen 79 an den Keilstücken 67 und der Schrägflächen 51 der Ringnut 61 lässt sich der resultierende Reibschluss zwischen Anlagefläche 55 und Aufnahmefläche 53 auf einen optimalen Wert einstellen, so dass sich bei Übersteigen eines kritischen, zwischen Werkzeugscheibe 1 und Aufnahmescheibe 51 wirkenden Drehmomentes ein Schlüpfen der Keilstücke 67 in der Ringnut 61 einstellt. Somit ist auf konstruktiv einfache Weise eine Sicherheitseinrichtung geschaffen, die bei einem im Betrieb auftretenden "Crashfall", beispielsweise einer Blockade des Revolverkopfes 3 bei betätigtem Schwenkantrieb, Beschädigungen vermeidet. Bei dem im Spann- oder Festlegezustand gegebenen Übergreifen der Zylindermantelfläche 59 der Aufnahmescheibe 51 durch den Ansatz 65 der Werkzeugscheibe 1 bilden die Mantelfläche 59 und die zylindrische Innenfläche des Ansatzes 65 Passflächen zur gegenseitigen Zentrierung von Werkzeugscheibe 1 und Aufnahmescheibe 51. Gleichzeitig bilden die die Aufnahmefläche 55 bildenden Stirnfläche der Aufnahmescheibe 51 und die zugeordnete Anlagefläche 53 an der Werkzeugscheibe 1 Passflächen für die axiale Positionierung. Um die Aufnahmescheibe 51 und damit die Werkzeugscheibe 1 in den jeweils eingestellten Schwenkpositionen formschlüssig zu verriegeln, ist eine Verriegelungseinrichtung in Form eines Riegelkörpers 85 vorgesehen, der hydraulisch verschiebbar ist, um eine zwischen Riegelkörper 85 und Aufnahmescheibe 51 vorgesehene Hirthverzahnung 87 in und außer Eingriff zu bringen.

## Patentansprüche

1. Werkzeugrevolver mit einer Werkzeugscheibe (1), die mindestens eine Werkzeugaufnahme (7) für ein Bearbeitungswerkzeug aufweist und an einer Aufnahmescheibe (51) festgelegt ist, die um eine eine Schwenkachse (17) definierende Trägersäule (15) in Positionen schwenkbar ist, in denen das betreffende Bearbeitungswerkzeug in einer Arbeitsposition ist, wobei an der Werkzeugscheibe (1) eine Anlagefläche (55) vorgesehen ist, die mittels einer Spanneinrichtung mit einer Aufnahmefläche (53) an der Aufnahmescheibe (51) verspannbar ist, **dadurch gekennzeichnet, dass** die Spanneinrichtung am einen (51) der beiden zu verspannenden Bauelemente (1, 51) eine zur Schwenkachse (17) konzentrische, radial außenseitig offene Ringnut mit zumindest einer inneren Schrägfläche (81) und am jeweils anderen Bauelement (1) zumindest ein in die Ringnut (61) unter Druckkraft eingreifendes Druckstück (57) aufweist, das eine Keilfläche (79) besitzt, die in Zusammenwirkung mit der Schrägfläche (81) der Ringnut (61) aus der Druckkraft eine Kraftkomponente als Spannkraft erzeugt, die die Anlagefläche (55) und die Aufnahmefläche (53) gegeneinander presst.

2. Werkzeugrevolver nach Anspruch 1, **dadurch gekennzeichnet, dass** die Ringnut (61) in einer an der Aufnahmescheibe (51) vorgesehenen, zur Schwenkachse (17) konzentrischen Zylindermantelfläche (59) ausgebildet ist und dass die Werkzeugscheibe (1) einen die Zylindermantelfläche (59) übergreifenden Ansatz (65) aufweist, an dem vorzugsweise mehr als ein Druckstück (57) angeordnet ist.

3. Werkzeugrevolver nach Anspruch 2, **dadurch gekennzeichnet, dass** die Aufnahmescheibe (51) durch eine flanschartige Erweiterung am Ende einer die Trägersäule (15) umgebenden Hohlwelle (43) gebildet ist und dass die endseitige, eine Radialebene definierende Stirnfläche der Erweiterung die Aufnahmefläche (53) bildet, die an die Anlagefläche (55) anpressbar ist, die eine den Ansatz (65) der Werkzeugscheibe (1) innenseitig begrenzende Radialebene bildet.

4. Werkzeugrevolver nach Anspruch 2 oder 3, **dadurch gekennzeichnet, dass** die Zylindermantelfläche (59) der Aufnahmescheibe (51) und die zylindrische Innenfläche des Ansatzes (65) der Werkzeugscheibe (1) Passflächen zur Zentrierung letzterer und der Aufnahmescheibe (51) bilden.

5. Werkzeugrevolver nach einem der Ansprüche 1 bis 4, **dadurch gekennzeichnet, dass** die Ringnut (61) einen V-förmigen Querschnitt und das jeweilige Druckstück (57) ein die Keilfläche (79) bildendes Keilstück (67) aufweisen, deren gegenseitige Lagebeziehung und Abmessungen derart gewählt sind, dass die Keilfläche (79) mit derjenigen Seitenwand der Nut (61) zusammenwirkt, die die Schrägfläche (81) zur Erzeugung der spannenden Kraftkomponente bildet.

6. Werkzeugrevolver nach einem der Ansprüche 2 bis 5, **dadurch gekennzeichnet, dass** das jeweilige Druckstück (57) in einer im Ansatz (65) der Werkzeugscheibe (1) vorgesehenen Radialbohrung (63) angeordnet ist, die ein Innengewinde für eine die Druckkraft erzeugende Verschraubung aufweist.

7. Werkzeugrevolver nach Anspruch 5 oder 6, **dadurch gekennzeichnet, dass** das Druckstück (57) aus dem Keilstück (67) und einem relativ zu diesem drehbaren, Teil der Verschraubung bildenden Gewindestück (69) gebildet ist.

8. Werkzeugrevolver nach Anspruch 7, **dadurch gekennzeichnet, dass** die Radialbohrung (63) einen äußeren Gewindeabschnitt (71) für das Außengewinde des Gewindestückes (69) und einen gewindefreien inneren Führungsabschnitt (73) aufweist, der eine Passung zur Führung des Keilstückes (67) bildet.

9. Werkzeugrevolver nach Anspruch 7 oder 8, **dadurch gekennzeichnet, dass** das Keilstück (67) und das Gewindestück (69) drehbar, jedoch unverlierbar miteinander verbunden sind.

## Claims

1. A tool turret comprising a tool disc (1) which has at least one tool holder (7) for a machining tool and is fastened to a receiver disc (51) which can be swivelled around a support column (15) defining a swivel axis (17) into positions in which the respective machining tool is in a working position, there being provided on the tool disc (1) a contact surface (55) which can be clamped onto a receiving surface (53) on the receiver disc (51) by means of a clamping device, **characterised in that** the clamping device has an annular groove on one (51) of the two components (1, 51) to be clamped, said annular groove being concentric to the swivel axis (17) and being open radially on the outside and having at least one inner inclined surface (81) and the clamping device has at least one pressure piece (57) on the respective other (1) component, said pressure piece engaging with the annular groove (61) under compression force and having a wedge-shaped surface (79) that in co-operation with the inclined surface (81) of the annular groove (61) generates a force component as a clamping force from the compression force, and this clamping force presses the contact surface (55) and the receiving surface (53) against one another.

2. The tool turret according to Claim 1, **characterised in that** the annular groove (61) is formed in a cylindrical lateral surface (59) which is provided on the receiver disc (51) and is concentric to the swivel axis (17) and that the tool disc (1) has a shoulder (65) which extends over the cylindrical lateral surface (59) and on which preferably more than one pressure piece (57) is arranged.

3. The tool turret according to Claim 2, **characterised in that** the receiver disc (51) is formed by means of a flange-like extension on the end of a hollow shaft (43) surrounding the support column (15) and that the endside front face of the extension defining a radial plane forms the receiving surface (53) which can be pressed against the contact surface (55) that forms a radial plane that defines the shoulder (65) of the tool disc (1) on the inside.

4. The tool turret according to Claim 2 or 3, **characterised in that** the cylindrical lateral surface (59) of the receiver disc (51) and the cylindrical inner surface of the shoulder (65) of the tool disc (1) form fitting surfaces for centring the latter and the receiver disc (51).

5. The tool turret according to any of Claims 1 to 4, **characterised in that** the annular groove (61) has a V-shaped cross-section and the respective pressure piece (57) has a wedge-shaped piece (67) forming a wedge-shaped surface (79), the relative position and dimensions of which are chosen in such a way that the wedge-shaped surface (79) co-operates with the side wall of the groove (61) that forms the inclined surface (81) for generating the clamping force component.

6. The tool turret according to any of Claims 2 to 5, **characterised in that** the respective pressure piece (57) is arranged in a radial borehole (63) which is provided in the shoulder (65) of the tool disc (1) and which has an internal thread for a threaded joint that generates the compression force.

7. The tool turret according to Claim 5 or 6, **characterised in that** the pressure piece (57) is made of the wedge-shaped piece (67) and a threaded piece (69) which can be rotated relative to this wedge-shaped piece and which forms a part of the threaded joint.

8. The tool turret according to Claim 7, **characterised in that** the radial borehole (63) has an outer threaded section (71) for the external thread of the threaded piece (69) and a non-threaded inner guide section (73) which forms a fit for guiding the wedge-shaped piece (67).

9. The tool turret according to Claim 7 or 8, **characterised in that** the wedge-shaped piece (67) and the threaded piece (69) are connected to one another such that they can be rotated, but not detached.

## Revendications

1. Tourelle d'outil ayant un disque (1) d'outil, qui a au moins un logement (7) d'outil pour un outil d'usinage et qui est fixé sur un disque (51) de réception qui peut pivoter, autour d'une colonne (15) de support définissant un axe (17) de pivotement, en des positions dans lesquelles l'outil d'usinage concerné est dans une position de travail, dans laquelle il est prévu sur le disque (1) d'outil une surface (55) d'application, qui peut être serrée sur le disque (51) de réception par une surface (53) de réception au moyen d'un dispositif de serrage, **caractérisée en ce que** le dispositif de serrage a, sur l'un (51) des deux éléments (1, 51) constitutifs à serrer, une rainure annulaire ouverte du côté extérieur radialement, concentrique à l'axe (17) de pivotement et ayant au moins une surface (81) inclinée intérieure et, sur l'autre élément (1) constitutif, au moins une pièce (57) de poussée, pénétrant sous une force de poussée dans la rainure (61) annulaire et ayant une surface (79) en coin, qui, en coopération avec la surface (81) inclinée de la rainure (61) annulaire, produit à partir de la force de poussée une composante de force en tant que force de serrage, qui presse l'une contre l'autre la surface (55) d'application et la surface (53) de réception.

2. Tourelle d'outil suivant la revendication 1, **caractérisée en ce que** la rainure (61) annulaire est constituée sous la forme d'une surface (59) latérale de cylindre concentrique à l'axe (17) de pivotement et prévue sur le disque (51) de réception et **en ce que** le disque (1) d'outil a un prolongement (55) qui empiète sur la surface (59) latérale de cylindre et sur lequel est montée, de préférence, plus qu'une pièce (57) de poussée.

3. Tourelle d'outil suivant la revendication 2, **caractérisée en ce que** le disque (51) de réception est formé par un élargissement de type en bride à l'extrémité d'un arbre (43) creux entourant la colonne (15) de support et **en ce que** la surface frontale, définissant du côté de l'extrémité un plan radial, de l'élargissement forme la surface (53) de réception qui peut être poussée sur la surface (55) d'application, laquelle forme un plan radial délimitant du côté intérieur le prolongement (65) du disque (1) d'outil.

4. Tourelle d'outil suivant la revendication 2 ou 3, **caractérisée en ce que** la surface (59) latérale de cylindre du disque (51) de réception et la surface intérieure cylindrique du prolongement (65) du disque (1) d'outil forment des surfaces d'ajustement pour le centrage de ce dernier et du disque (51) de réception.

5. Tourelle d'outil suivant l'une des revendications 1 à 4, **caractérisée en ce que** la rainure (61) annulaire à une section transversale en forme de V et la pièce (57) de poussée respective a une pièce (67) en coin qui forme la surface (79) en coin et dont le rapport mutuel de position et les dimensions sont choisis de manière à ce que la surface (79) en coin coopère avec la paroi latérale de la rainure (61) qui forme la surface (81) inclinée pour la production de la composante de force de serrage.

6. Tourelle d'outil suivant l'une des revendications 2 à 5, **caractérisée en ce que** la pièce (57) de poussée est disposée dans un trou (63) radial, prévu dans le prolongement (65) du disque (1) d'outil et ayant un taraudage pour un vissage produisant la force de poussée.

7. Tourelle d'outil suivant la revendication 5 ou 6, **caractérisée en ce que** la pièce (57) de poussée est formée de la pièce (67) en coin et d'une pièce (69) filetée tournant par rapport à celle-ci et formant une partie du vissage.

8. Tourelle d'outil suivant la revendication 7, **caractérisée en ce que** le trou (63) radial a un tronçon (71) filetée extérieur pour le filetage extérieur de la pièce (69) filetée et un tronçon (73) intérieur de guidage sans filetage qui forme un ajustement pour le guidage de la pièce (67) en coin.

9. Tourelle d'outil suivant la revendication 7 ou 8, **caractérisée en ce que** la pièce (67) en coin et la pièce (69) filetée sont reliées l'une à l'autre de manière à pouvoir tourner, mais sans possibilité de se perdre.
